# EUROPÄISCHE PATENTSCHRIFT

(11) **EP 2 435 958 B1**
(45) Veröffentlichungstag und Bekanntmachung des Hinweises auf die Patenterteilung: **25.12.2013**
(21) Anmeldenummer: 10721810.9
(22) Anmeldetag: 28.05.2010
(51) Int. Cl.: G06K 19/077

(54) **VERFAHREN ZUR HERSTELLUNG TRAGBARER DATENTRÄGER**
METHOD FOR PRODUCING PORTABLE DATA CARRIERS
PROCÉDÉ DE FABRICATION DE SUPPORTS DE DONNÉES PORTABLES

(30) Priorität: 29.05.2009 DE 102009023405
(43) Veröffentlichungstag der Anmeldung: 04.04.2012
(73) Patentinhaber: Giesecke & Devrient GmbH, 81677 München (DE)
(72) Erfinder: TARANTINO, Thomas, 83410 Laufen (DE); GÖTZ, Thomas, 85570 Markt Schwaben (DE); ELSÄSSER, Marc, 86199 Augsburg (DE); GRIESMEIER, Robert, 83052 Heufeldmühle (DE)
(74) Vertreter: Niedermeier, Peter
(86) Internationale Anmeldenummer: PCT/EP2010/057480
(87) Internationale Veröffentlichungsnummer: WO 2010/136590

(56) Entgegenhaltungen:
- EP-A2- 0 706 152
- WO-A1-2009/127395
- DE-A1- 19 614 808
- DE-C1- 10 016 715
- DE-C1- 19 602 821
- DE-T2- 60 121 974

## Beschreibung

Die vorliegende Erfindung betrifft ein Verfahren zur Herstellung tragbarer Datenträger, insbesondere im Format ID-000 oder Mini-UICC. Im Falle von SIM-Karten für Mobiltelefone werden Datenträger im ID-000 Format auch als Plug-In SIM-Karten bezeichnet.

Zur Herstellung tragbarer Datenträger in kleinen Formaten wie ID-000 gemäß ISO 7810 oder Mini-UICC werden üblicherweise zunächst Datenträger in einem größeren Format, insbesondere im Format ID-1 gemäß ISO 7810 hergestellt. Der Datenträger im Format ID-1 wird mit einer Perforation versehen, so dass lediglich noch schmale Verbindungsstege stehen beleiben, um entlang dieser Perforation den Datenträger des kleineren Formats heraustrennen zu können. Das Heraustrennen des kleinformatigen Datenträgers wird zumeist direkt vom Endverbraucher vorgenommen, bevor dieser beispielsweise die SIM-Karte in ein Mobiltelefon einsetzt. Diese Vorgehensweise hat den Vorteil, dass zur Herstellung der kleinformatigen Datenträger die herkömmlichen, bereits bekannten Produktionsmaschinen zur Herstellung der großen Datenträger verwendet werden können. Die Vorgehensweise hat aber den Nachteil, dass der Rest des größeren Datenträgers, der nach dem Heraustrennen des kleinformatigen Datenträgers zurückbleibt, keine weitere Funktion hat und entsorgt wird. Durch den höheren Materialverbrauch entstehen unerwünschte Materialkosten bei der Herstellung der tragbaren Datenträger, und es fällt Abfall an, der angesichts modernen Umweltbewusstseins minimal gehalten werden sollte.

Es sind Verfahren zur Herstellung tragbarer Datenträger im ID-1 Format bekannt, bei denen verschiedene Schichten des Datenträgers in Form von Substratfolien, üblicherweise Kunststofffolien, als Rollenware bereitgestellt werden. Die verschiedenen Substratfolien werden von der jeweiligen Rolle abgerollt, zusammengeführt und dann beispielsweise unter Einsatz von Kleber und/oder Wärme laminiert. Aus dem entstehenden Verbund werden später die Kartenkörper im Format ID-1 herausgetrennt, welche die kleinformatigen, heraustrennbaren Datenträger enthalten. In die laminierten Kartenkörper wird eine Kavität eingebracht, in welche ein Chipmodul implantiert wird, um den kleinformatigen Datenträger im Wesentlichen fertigzustellen. Dazu werden die Chipmodule auf einem Modulträgerband von Rolle bereitgestellt, aus diesem herausgetrennt und in die Kavität implantiert, beispielsweise ausgestanzt und maschinell eingesetzt. Das Einbringen der Kavität in den Kartenkörper und das Implantieren des Chipmoduls in die Kavität erfordert mehrere Arbeitsschritte und ist daher relativ aufwändig.

Ein Modulträgerband mit darauf angeordneten Chipmodulen wird beispielsweise in der DE 196 40 304 C2 beschrieben. Auf einer Seite des Trägerbands, welches beispielsweise aus einem elektrisch isolierenden Epoxidharz bestehen kann, sind die Kontaktflächen der Chipmodule angeordnet. Auf der anderen Seite des Trägerbands sind die mit diesen Kontaktflächen durch das Trägerband hindurch elektrisch verbundenen Halbleiterschaltkreise (Chips) angeordnet. Zum Schutz der Chips und der elektrischen Verbindungen sind die Chips einzeln mit Vergussmasse umgeben.

Ein Verfahren zur Herstellung tragbarer Datenträger mit sehr kleinen Abmessungen wird beispielsweise in der DE 10 2004 028 218 B4 beschrieben. Hier werden die Chipmodule allerdings nicht aus einem Modulträgerband herausgetrennt und in eine Kavität eines Kartenkörpers eingebracht. Die Herstellung der tragbaren Datenträger erfolgt stattdessen im Spritzgießverfahren, wobei auf beiden Seiten des Modulträgerbands Teile der Spritzgießform angeordnet werden und das Chipmodul auf diese Weise direkt beim Spritzgießen in den Datenträger integriert wird. Dieses Verfahren ist allerdings relativ kostspielig.

WO 2009/127395 stellt Stand der Technik entsprechend Art.54(3) EPÜ da.

Aufgabe der vorliegenden Erfindung ist es daher, ein Verfahren zur Herstellung tragbarer Datenträger, insbesondere in kleinen Formaten wie ID-000 oder Mini-UICC, vorzuschlagen, welches eine einfache, zügige und dementsprechend kostengünstige Herstellung solcher tragbarer Datenträger erlaubt.

Die Aufgabe wird gelöst durch ein Verfahren mit den Merkmalen des unabhängigen Anspruchs 1. Weiterbildungen und vorteilhafte Ausgestaltungen der Erfindung sind in davon abhängigen Ansprüchen angegeben.

Bei dem erfindungsgemäßen Verfahren werden ein Modulträgerband und zumindest eine Substratfolie als Rollenware bereitgestellt. Nach dem Abrollen und kontinuierlichen Zusammenführen von der jeweiligen Rolle wird das Modulträgerband dauerhaft mit der Substratfolie derart verbunden, dass die Kontaktflächen der auf dem Modulträgerband angeordneten Chipmodule nach außen weisen. Das Modulträgerband wird somit selbst Bestandteil des Schichtverbunds, aus dem später die einzelnen Datenträger herausgetrennt werden, wobei zu diesem Zweck das Modulträgerband und die zumindest eine Substratfolie so zueinander angeordnet werden, dass die Kontaktflächen der Chipmodule nicht durch die Substratfolie bedeckt werden.

Dieses Verfahren ermöglicht eine einfache Herstellung tragbarer Datenträger, da sowohl die Substratfolie als auch das Modulträgerband als Rollenware bereitgestellt und dauerhaft miteinander verbunden werden. Dadurch entfällt das Implantieren zuvor aus dem Modulträgerband herausgetrennter Chipmodule in das Substrat und es bleibt wenig Modulträgerband als Abfall übrig. Durch das erfindungsgemäße Verfahren lässt sich die Herstellung der tragbaren Datenträger außerdem mit einer hohen Bearbeitungsgeschwindigkeit durchführen.

Bevorzugt werden die tragbaren Datenträger derart aus dem Verbund herausgetrennt, dass die Kontaktflächen mehr als ein Drittel einer Oberfläche jeweils eines der tragbaren Datenträger bilden. Insbesondere ist dies bei kleinformatigen Datenträgern beispielsweise im Format ID-000 gemäß ISO 7810 oder Mini-UICC der Fall. Bei solchen kleinformatigen tragbaren Datenträgern wird ein großer Teil derjenigen Oberfläche, auf welcher die Kontaktflächen angeordnet sind, durch die Kontaktflächen selbst gebildet, wodurch der Materialverbrauch und damit die Kosten gering sind. Aufgrund des geringen Platzbedarfs werden solche kleinformatigen tragbaren Datenträger insbesondere für mobile Telekommunikationsendgeräte eingesetzt.

Vorteilhaft sind die Chipmodule auf dem Modulträgerband in Abständen zueinander angeordnet, die den Breiten- und/oder Längenabmessungen von tragbaren Datenträgern im Format ID-000 oder Mini-UICC entsprechen. Auf diese Weise sind die tragbaren Datenträger nach dem Verbinden des Modulträgerbands mit der Substratfolie auf dem entstehenden Verbund direkt aneinander angrenzend angeordnet. Somit kann eine kostengünstige Herstellung der kleinformatigen Datenträger im ID-000 oder Mini-UICC Format erreicht werden, da sowohl durch die Ausnutzung der Fläche des Modulträgerbands als auch durch die Ausnutzung der Fläche der Substratfolie sehr wenig Abfallmaterial produziert wird und insbesondere kein zusätzliches Material zur Herstellung größerer Datenträger beispielsweise im Format ID-1 benötigt wird, aus welchen die kleinformatigen Datenträger herausgetrennt werden müssten.

In einer ersten Variante des Verfahrens werden das Modulträgerband und die zumindest eine Substratfolie nach dem Verbinden als Verbund auf eine Rolle aufgewickelt. Aus diesem Verbund können dann in einem späteren Prozessstadium tragbare Datenträger herausgetrennt, beispielsweise ausgestanzt werden, welche jeweils mindestens ein Chipmodul aufweisen. Ein solches Verfahren wird auch als Rolle-zu-Rolle-Verfahren bezeichnet und erlaubt eine hohe Bearbeitungsgeschwindigkeit.

In einer zweiten Variante des Verfahrens werden aus dem das Modulträgerband und die zumindest eine Substratfolie umfassenden Verbund tragbare Datenträger derart herausgetrennt, dass jeder tragbare Datenträger mindestens ein Chipmodul aufweist. Dieses Verfahren, bei welchem die tragbaren Datenträger nach dem Verbinden aus dem Verbund herausgetrennt, beispielsweise ausgestanzt werden, ohne dass der Verbund zunächst auf eine Rolle aufgewickelt wird, wird auch als Rolle-zu-Karte-Verfahren bezeichnet.

Die zumindest eine Substratfolie weist zumindest zwei über-einander anzuordnende Folien. Diejenige Folie, welche direkt mit dem Modulträgerband verbunden wird, kann Aussparungen aufweisen, in welchen von dem Modulträgerband abstehende Teile der Chipmodule angeordnet werden. Die abstehenden Teile können beispielsweise die Chips der Chipmodule sein, welche auf der Seite des Modulträgerbands, die mit der Substratfolie verbunden wird, angeordnet sind. Durch die Anordnung der von dem Modulträgerband abstehenden Teile in den Aussparungen, wie beispielsweise der Chips, wird das Verbinden des Modulträgerbands mit der zumindest einen Substratfolie weiter vereinfacht.

Bevorzugt erfolgt das Verbinden des Modulträgerbands mit der zumindest einen Substratfolie mittels Kleber. Der Kleber kann entweder nur jeweils auf eine zu verbindende Fläche oder auf beide aufeinander treffenden Flächen aufgebracht werden. Der Kleber kann dabei zum Beispiel mittels Rollen aufgetragen oder aufgesprüht werden.

Das Verbinden des Modulträgerbands mit der zumindest einen Substratfolie erfolgt vorteilhaft unter Verwendung von Pressrollen. Nach dem Abrollen und Zusammenführen des Modulträgerbands und der zumindest einen Substratfolie werden diese beispielsweise zwischen mehrere Pressrollen geführt und durch Druck miteinander verbunden. Die Pressrollen können dabei zusätzlich beheizt werden, um das Verbinden zu unterstützen. Wird ein hitzeaktivierbares Klebersystem verwendet, kann dies beispielsweise durch beheizbare Pressrollen während des Verbindens aktiviert werden.

Gemäß der Ausführung des Verfahrens ist die Substratfolie dicker als das Modulträgerband, wobei vor dem Zusammenführen des Modulträgerbands und der Substratfolie in eine Oberfläche, auf welcher das Modulträgerband mit der Substratfolie verbunden wird, eine Vertiefung zur Aufnahme des Modulträgerbands eingebracht wird. Durch das Verringern der Dicke der Substratfolie in diesem Bereich kann eine Stufe vermieden werden, die entstehen würde, wenn ein vergleichsweise schmales Modulträgerband verwendet und auf die Substratfolie ohne Vertiefung oder Aussparung aufgebracht werden würde. Durch diese Vorgehensweise wird eine bündige Oberfläche des tragbaren Datenträgers erreicht. Es werden im Bereich der Vertiefung Aussparungen zur Aufnahme der von dem Modulträgerband abstehenden Teile vorgesehen.

Eine beispielhafte Ausgestaltung ist, daß eine Verbindung des Modulträgerbandes mit der einen Folie, die im Wesentlichen die gleiche Dicke wie das Modulträgerband aufweist und in einer Ebene angrenzend an das Modulträgerband angeordnet ist, hergestellt wird, indem über der Stelle, an der das Modulträgerband und die eine Folie aneinander angrenzen, eine beheizte Rolle läuft. Diese beheizte Rolle erwärmt das Modulträgerband und die eine Folie und verschmilzt und verbindet somit das Modulträgerband und die eine Folie miteinander.

In einer vorteilhaften Ausgestaltung des Verfahrens wird die zumindest eine Substratfolie vor dem Zusammenführen optisch gestaltet, insbesondere bedruckt. Dabei werden die Positionen der später herauszutrennenden tragbaren Datenträger berücksichtigt. Die optische Gestaltung kann durch Aufbringen von Logos, Schriftzügen, Grafiken, Farben usw. erfolgen. Neben dem Bedrucken, beispielsweise im Tampondruck, Inkjet, sind auch andere Bearbeitungsverfahren, wie beispielsweise Laserbeschriften denkbar.

Vorteilhaft erfolgt nach dem Verbinden des Modulträgerbands mit der zumindest einen Substratfolie eine optische und/oder elektronische, insbesondere eine optisch prüfbare und/oder elektronisch prüfbare Personalisierung der aus dem Verbund herauszutrennenden tragbaren Datenträger. Durch die Personalisierung vor dem Heraustrennen der tragbaren Datenträger aus dem Verbund wird das Verfahren insbesondere für kleinformatige tragbare Datenträger vereinfacht, da die tragbaren Datenträger nicht einzeln gehandhabt werden müssen.

Das erfindungsgemäße Verfahren zur Herstellung kleinformatiger tragbarer Datenträger kann durch eine Vorrichtung ausgeführt werden, welche eine Aufnahme für eine Modulträgerbandrolle und zumindest eine Aufnahme für zumindest eine Substratfolienrolle umfasst. Weiter weist die Vorrichtung eine Einrichtung zum Abrollen und kontinuierlichen Zusammenführen des Modulträgerbands und der zumindest einen Substratfolie sowie eine Einrichtung zum dauerhaften Verbinden des Modulträgerbands mit der zumindest einen Substratfolie auf. Darüber hinaus weist die Vorrichtung eine Einrichtung zum Heraustrennen von tragbaren Datenträgern im Format ID-000 oder Mini-UICC aus dem das Modulträgerband und die damit verbundene Substratfolie umfassenden Verbund auf.

Beispiele werden im Folgenden anhand der begleitenden Zeichnungen beschrieben. Darin zeigen:
Figur 1 schematisch eine Vorrichtung zur Herstellung tragbarer Datenträger im Rolle-zu-Rolle-Verfahren,
Figur 2 schematisch eine Vorrichtung zur Herstellung tragbarer Datenträger im Rolle-zu-Karte-Verfahren,
Figur 3 ein Modulträgerband in Draufsicht,
Figur 4 ein mit einer Substratfolie verbundenes Modulträgerband in Draufsicht,
Figur 5 einen tragbaren Datenträger im Format ID-000,
Figur 6 einen Querschnitt durch ein erstes Beispiel eines Verbunds aus einem Modulträgerband und einer Substratfolie, und
Figur 7 einen Querschnitt durch ein zweites Beispiel eines Verbunds aus einem Modulträgerband und einer Substratfolie.

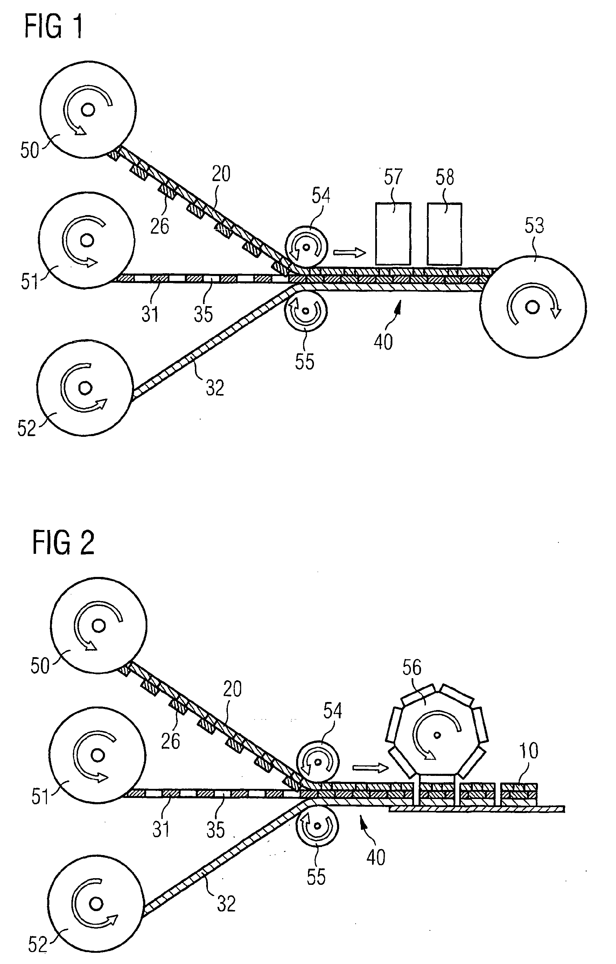

In Figur 1 ist stark schematisiert eine Vorrichtung zur Herstellung tragbarer Datenträger aus einem Modulträgerband 20 und einer Substratfolie im Rolle-zu-Rolle-Verfahren dargestellt, wobei die Substratfolie hier aus zwei Folien 31, 32, beispielsweise Kunststofffolien, besteht. Bei der Herstellung des Verbunds 40 im Rolle-zu-Rolle-Verfahren werden die einzelnen Schichten 20, 31, 32 des Verbunds 40 auf Rollen 50, 51, 52 bereitgestellt und der Verbund 40 wird wieder auf eine Rolle 53 aufgewickelt.

Das Modulträgerband 20, welches die Chipmodule 26 trägt, wird von der Rolle 50 abgerollt. Zudem werden von den Rollen 51, 52 die Kunststofffolienbahnen 31, 32 abgerollt. Die Kunststofffolie 31 weist eine Dicke auf, die der Höhe der Chips oder der Vergussmasse entspricht. Ferner weist die Kunststofffolie 31 Aussparungen 35 auf, in welche die von dem Modulträgerband 20 abstehenden Chips eingebracht werden. Die Kunststofffolie 32 ist dagegen durchgehend ausgeführt und weist keine Aussparungen auf. Sie bildet die den Kontaktflächen der Chipmodule 26 abgewandte Seite der Datenträger. Die Kunststofffolien 31, 32 können zuvor beispielsweise bedruckt worden sein. Der Verbund 40 kann auch vor dem Aufwickeln auf die Rolle 53 mittels einer Druckeinrichtung 57 bedruckt werden. Das Bedrucken des Verbunds 40 oder der Folien 31, 32 vor dem Verbinden kann zum Beispiel im Tampondruck erfolgen.

Die Schichten 20, 31, 32 werden zwischen Presswalzen 54,55 zusammengeführt und dauerhaft miteinander verbunden. Die Presswalzen 54, 55 können beheizt werden, um beispielsweise ein mittels Rollen auf das Modulträgerband 20 und/oder die Folien 31, 32 aufgetragenes hitzeaktivierbares Klebersystem zu aktivieren oder um die Folien 20, 31, 32 allein durch Druck und Wärme miteinander zu laminieren, wobei das Klebesystem eine hitzeaktivierbare Klebefolie sein kann. Der entstandene Verbund 40 wird danach auf die Rolle 53 aufgespult. Zuvor kann eine elektronische und/oder optische Personalisierung mittels einer Personalisierungseinrichtung 58 vorgenommen werden. Die Personalisierung kann jedoch auch in einer gesonderten Maschine, welche den auf der Rolle 53 aufgewickelten Verbund 40 weiterbearbeitet, erfolgen.

Im Gegensatz zu der in Figur 1 dargestellten Vorrichtung ist die in Figur 2 - ebenfalls stark schematisiert - dargestellte Vorrichtung zur Herstellung tragbarer Datenträger im Rolle-zu-Karte-Verfahren eingerichtet. Hierbei werden das Modulträgerband 20 und die Folien 31, 32 zwar ebenfalls als Rollenware bereitgestellt, die tragbaren Datenträger werden jedoch nach dem Verbinden der einzelnen Schichten 20, 31, 32 ohne ein darauf folgendes Aufrollen aus dem Verbund 40 herausgetrennt. Das Heraustrennen kann beispielsweise mittels einer Rotationsstanze 56 erfolgen, welche aus dem Verbund 40 während des Transports des Verbunds 40 durch Rotation einzelne Datenträger 10 ausstanzt. Ebenfalls können eine Druckeinrichtung 57 und eine Personalisierungseinrichtung 58 beispielsweise in Transportrichtung vor der Rotationsstanze 56 vorgesehen sein.

Bevorzugt werden die Datenträger 10 so aus dem Verbund 40 herausgetrennt, dass nahezu kein Rest des Verbunds 40 als Abfall übrig bleibt. Bei dem Rolle-zu-Karte-Verfahren werden nur noch eventuell verbleibende Reste des Verbunds 40 auf eine Rolle aufgewickelt. Solche Reste können beispielsweise ein Gitter sein, welches nach dem Heraustrennen der Datenträger 10 übrig bleibt. Es ist auch möglich, dass lediglich an den Rändern des Verbunds 40 ein schmaler Streifen nach dem Heraustrennen der Datenträger 10 stehen bleibt, wohingegen die Datenträger 10 in Transportrichtung des Verbunds 40 direkt aneinander grenzen und ohne Rest abgetrennt werden. Zur Erhöhung der Stabilität des Datenträgers beim Transport während der Herstellung kann der Rand auch erst ganz am Ende der Herstellung abgetrennt werden.

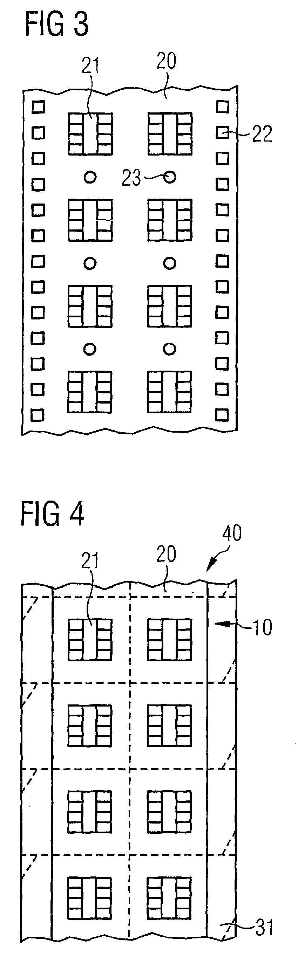

Zur Herstellung der tragbaren Datenträger 10 wird ein Modulträgerband 20 verwendet, welches in Figur 3 dargestellt ist. Bei dem Modulträgerband 20 kann es sich beispielsweise um ein Band aus elektrisch isolierendem Epoxidharz, beispielsweise FR4, oder PI handeln. Um einen sicheren und exakten Transport des Modulträgerbands 20 während des Herstellungsprozesses zu ermöglichen, weist das Modulträgerband 20 Transportlöcher 22 auf. Alternativ oder zusätzlich können auch Transportlöcher 23 zwischen den Kontaktflächen 21 angeordnet sind. Gegebenenfalls kann auf die Transportlöcher 22, 23 auch ganz verzichtet werden, wobei in diesem Fall der exakte Transport durch Referenzmarken auf dem Modulträgerband 20 sichergestellt werden kann. Das Modulträgerband 20 weist mindestens eine Reihe von Chipmodulen 26 mit den jeweils zugehörigen Kontaktflächen 21 auf.

Auf der dargestellten Oberfläche des Modulträgerbands 20 sind ISO-Kontaktflächen 21 angeordnet. Auf der nicht dargestellten Rückseite des Modulträgerbands 20 befinden sich die Chips, welche mit den Kontaktflächen 21 durch das Modulträgerband 20 hindurch elektrisch verbunden sind. Falls die Chips mittels Bonddrähtchen mit den Kontaktflächen 21 verbunden sind, sind diese zum Schutz mit Vergussmasse umgeben (Globtop). Es können aber auch so genannte FlipChips verwendet werden, welche direkt auf ihrer den Kontaktflächen 21 zugewandten Seite an Durchkontaktierungen angeschlossen werden. Bevorzugt sind die Kontaktflächen 21 auf dem Modulträgerband 20 entsprechend der Längen- und/oder Breitenabmessung der herzustellenden kleinformatigen Datenträger 10 angeordnet, so dass nahezu kein Materialrest bei der Herstellung der Datenträger 10 anfällt.

In Figur 4 ist ein Verbund 40 aus dem Modulträgerband 20 und einer Substratfolie 31 dargestellt. Vor der Herstellung des Verbunds 40 wurden die Ränder mit den Transportlöchern 22 des Modulträgerbands 20 abgetrennt. Die Substratfolie 31, beispielsweise eine Kunststofffolienbahn, kann zur Herstellung von Plug-In SIM-Karten 10 im ID-000 Format, welche jeweils 25mm lang sind, eine Breite von 50mm aufweisen, wenn das in Figur 3 dargestellte zweireihige Modulträgerband 20 verwendet wird. Bei einer entsprechenden Anordnung der Kontaktflächen 21 können so auf dem Verbund 40 die später herauszutrennenden SIM-Karten 10 direkt angrenzend aneinander angeordnet werden, um das Material besonders effizient zu nutzen. Eine beispielhafte Anordnung der SIM-Karten 10 im ID-000 Format auf dem Verbund 40 ist in Figur 4 durch gestrichelte Linien angedeutet.

Alternativ kann das Verfahren auch mit einem einreihigen Modulträgerband und einer entsprechend schmaleren Substratfolie durchgeführt werden. Denkbar ist auch die Verwendung einer breiteren Substratfolie, auf die mehrere einreihige oder mehrreihige Modulträgerbänder parallel nebeneinander aufgebracht werden. Die Modulträgerbänder können dann in Abständen angeordnet sein, die den Abmessungen der herzustellenden Datenträger entsprechenden, im Falle von Datenträgern im ID-000 Format beispielsweise 25mm Abstände auf einer 310mm breiten gelochten Folie.

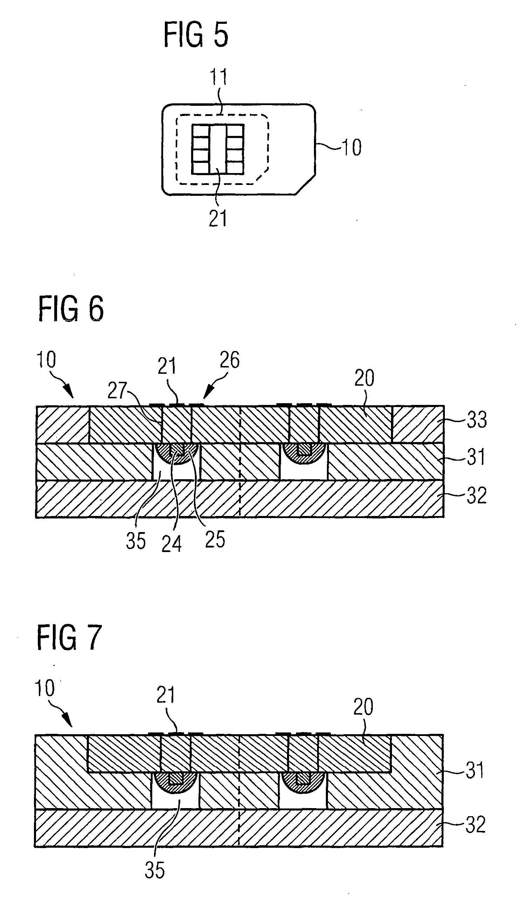

In Figur 5 ist ein tragbarer Datenträger 10 im ID-000 Format mit Kontaktflächen 21 dargestellt, welcher beispielsweise aus dem in Figur 4 dargestellten Verbund 40 herausgetrennt wurde. Da die Kontaktflächen 21 bei dem kleinformatigen Datenträger 10 im Verhältnis einen sehr viel größeren Anteil an der Oberfläche des Datenträgers einnehmen als bei einem Datenträger im ID-1 Format, kann viel Material eingespart werden, wenn an den Endverbraucher nur das Plug-In SIM 10 im ID-000 Format ausgegeben wird. Um die Kontaktflächen herum sind die Umrisse eines Datenträgers 11 im Mini-UICC Format angedeutet, bei welchem die Kontaktflächen einen noch größeren Anteil an der Oberfläche bilden als bei dem Datenträger 10 im ID-000 Format.

In den Figuren 6 und 7 sind Querschnitte durch zwei verschiedene Beispiele eines Folienverbunds 40 dargestellt. Die mittig angeordnete gestrichelte Linie deutet die Grenze zweier direkt aneinander angrenzender Datenträger 10 an, wie dies beispielsweise in Figur 4 zu erkennen ist. Die Rückseite des Datenträgers 10 wird durch die durchgehende Folie 32 gebildet. Darüber ist die Folie 31 angeordnet, welche Aussparungen 35 zur Aufnahme der Chips 24 und der die Chips 24 umgebenden Vergussmasse 25 aufweist. Die Chips 24 wie auch die über Durchkontaktierungen 27 angeschlossenen Kontaktflächen 21 sind jeweils Bestandteil eines der Chipmodule 26, welche auf dem Modulträgerband 20 in der oben beschriebenen Weise angeordnet sind.

Wie in den Figuren 6 und 7 zu erkennen ist, ist das Modulträgerband 20 schmaler als die durch die Folien 31, 32 gebildete Substratfolie. Durch Aufbringen des im Verhältnis schmaleren Modulträgerbands 20 auf die Substratfolie entsteht eine durch die Dicke des Modulträgerbands 20 bedingte Stufe.

In dem in Figur 6 dargestellten Verbund 40 ist daher angrenzend an das Modulträgerband 20 ein Folie 33 auf der Folie 31 angeordnet, welche die gleiche Dicke aufweist wie das Modulträgerband 20. Die Folie 33 ist in der Breite so angepasst, dass sie das schmale Modulträgerband 33 bis an den Rand der Folien31,32 ergänzt. Es entsteht somit eine bündige Oberfläche der Datenträger 10.

In dem in Figur 7 dargestellten Verbund 40 ist die Folie 31 wesentlich dicker als das Modulträgerband 20. In die Oberfläche der Folie 31, auf welche das Modulträgerband 20 aufgebracht wird, wurde vor dem Verbinden der Schichten 20, 31 eine Vertiefung zur Aufnahme des Modulträgerbands 20 beispielsweise mittels einer beheizten Prägewalze eingebracht. Die Tiefe der Vertiefung entspricht der Dicke des Modulträgerbands 20, so dass auch auf diese Weise eine bündige Oberfläche der Datenträger 10 erreicht wird. Zur Aufnahme der Chips 24 und der Vergussmassen 25 weist die Folie 31 wiederum Aussparungen 35 auf.

In einer Variante des Verfahrens, welche nicht Teil der Erfindung ist, erden die Chipmodule 26 vor dem Zusammenbringen der Schichten aus dem Modulträgerband 20 ausgestanzt. Dann werden in die Folien 31 und 33 Öffnungen in der Größe und Position gestanzt, daß das Chipmodul 26 später in die Öffnungen eingesetzt und befestigt werden kann. Anschließend werden erst die Folien 32 und 33 so auf die Folie 31 aufgebracht, daß sich die Folie 31 zwischen den Folien 32 und 33 befindet und die Öffnungen der Folien 31 und 33 so übereinanderliegen, daß ein Chipmodul 26 in die jeweilige Öffnung eingesetzt und befestigt werden kann. Danach wird ein Chipmodul 26 in die jeweilige Öffnung eingesetzt und befestigt. Die Folien 31, 32 und 33 haben bei dieser Variante jeweils die gleiche Breite.

In einer anderen Variante des Verfahrens, welche nicht Teil der Erfindung ist, wird ein Modulträgerband 20 direkt auf einen Verbund aus mindestens einer Substratfolie 31, 32, welche Aussparungen 35 zur Aufnahme der Chips 24 und der die Chips 24 umgebenden Vergussmasse 25 aufweist, aufgebracht und befestigt. Dabei entsteht zwar eine Stufe, was aber bei dünnen Modulbändern möglich ist. Die Gesamtdicke des Verbunds aus mindestens einer Substratfolie 31, 32 entspricht dabei der Kartendicke gemäß der einschlägigen Normen. Die Dicke des Modulbands muß dabei gemäß der einschlägigen Normen kleiner als 100 Mikrometer sein.

In einer anderen Variante des Verfahrens, welche nicht Teil der Erfindung ist, weisen das Modulträgerband 20 und die in einer Ebene mit dem Modulträgerband 20 angeordnete Substratfolie 33 einander abwechselnd gegenüber angeordnete Ausnehmungen und Vorsprünge auf. Dies hat den Vorteil, daß bei der Herstellung die Vorsprünge des Modulträgerbandes 20 in die Ausnehmungen der Substratfolie 33 und umgekehrt die Vorsprünge der Substratfolie 33 in die Ausnehmungen des Modulträgerbandes 20 eingreifen und damit eine sehr einfache und wirksame Positionierung von Modulträgerband 20 und Substratfolie 33 zueinander gemäß dem Reißverschlußprinzip ermöglichen.

Allgemein gilt, daß alle oben genannten Folien, wie z.B. die Folien 31, 32, 33 oder das Modulträgerband 20 aus mindestens einer Schicht bestehen. Die jeweilige Schicht besteht aus jedem geeigneten Werkstoff, wie z.B. Kunststoff, wobei bei mehreren Schichten die Schichten aus dem gleichen oder aus unterschiedlichen Werkstoffen bestehen können.

## Patentansprüche

1. Verfahren zur Herstellung tragbarer Datenträger (10, 11), umfassend die folgenden Schritte:
- Bereitstellen eines Modulträgerbands (20), auf welchem auf einer Vorderseite eine Mehrzahl von Chipmodulen (26) angeordnet sind, welche mit auf einer Rückseite des Modulträgerbands (20) angeordneten ISO-Kontaktflächen (21) elektrisch verbunden sind, und zumindest einer Substratfolie (31, 32) jeweils als Rollenware und
- Abrollen und Zusammenführen des Modulträgerbands (20) und der zumindest einen Substratfolie (31, 32),
- dauerhaftes Verbinden des Modulträgerbands (20) mit der zumindest einen Substratfolie (31, 32) zu einem Schichtverbund (40), wobei aus dem das Modulträgerband (20) und die mindestens eine Substratfolie (31, 32) umfassenden Verbund (40) tragbare Datenträger (10,11) derart herausgetrennt werden, dass jeder tragbare Datenträger (10, 11) mindestens ein Chipmodul (26) aufweist, derart dass die Kontaktflächen (21) der Chipmodule (26) auf einer Oberfläche des Datenträgers (10, 11) angeordnet sind, wobei das Verbinden des Modulträgerbands (20) mit der zumindest einen Substratfolie (31, 32) mittels Kleber erfolgt, **dadurch gekennzeichnet, dass**
die Rückseite des Datenträgers (10) durch eine durchgehende Folie (32) gebildet wird,
wobei darüber eine Folie (31) angeordnet ist, welche Aussparungen (35) zur Aufnahme von Chips (24) und einer die Chips (24) umgebenden Vergussmasse (25) aufweist,
wobei das Modulträgerband (20) schmaler als die durch die Folie (31) gebildete Substratfolie (31) ist,
wobei die Folie (31) wesentlich dicker als das Modulträgerband (20) ist,
wobei in die Oberfläche der Folie (31), auf welche das Modulträgerband (20) aufgebracht wird, vor dem Verbinden der Schichten (20, 31) eine Vertiefung zur Aufnahme des Modulträgerbands (20) eingebracht wurde,
wobei die Tiefe der Vertiefung der Dicke des Modulträgerbands (20) entspricht, so dass eine bündige Oberfläche der Datenträger (10) erreicht wird.

2. Verfahren nach Anspruch 1, **dadurch gekennzeichnet, dass** die Chipmodule (26) auf dem Modulträgerband (20) in Abständen zueinander angeordnet sind, die den Breiten- und/ oder Längenabmessungen von tragbaren Datenträgern im Format ID-000 (10) oder Mini-UICC (11) entsprechen.

3. Verfahren nach Anspruch 1 oder 2, **dadurch gekennzeichnet, dass** das Modulträgerband (10) und die zumindest eine Substratfolie (31, 32) nach dem Schritt des Verbindens als Verbund (40) auf eine Rolle (53) aufgewickelt werden, aus dem in einem späteren Prozessstadium tragbare Datenträger (10,11) herausgetrennt werden können, die jeweils mindestens ein Chipmodul (26) aufweisen.

4. Verfahren nach Anspruch 1 oder 2, **dadurch gekennzeichnet, dass** aus dem das Modulträgerband (20) und die Substratfolie (31, 32) umfassenden Verbund (40) tragbare Datenträger (10,11) derart herausgetrennt werden, dass jeder tragbare Datenträger (10,11) mindestens ein Chipmodul (26) aufweist.

5. Verfahren nach einem der Ansprüche 1 bis 4, **dadurch gekennzeichnet, dass** die tragbaren Datenträger (10,11) derart aus dem Verbund (40) herausgetrennt werden, dass die Kontaktflächen (21) mehr als ein Drittel einer Oberfläche jeweils eines der tragbaren Datenträger (10, 11) bilden.

6. Verfahren nach einem der Ansprüche 1 bis 5, **dadurch gekennzeichnet, dass** die tragbaren Datenträger im Format ID-000 (10) oder Mini-UICC (11) herausgetrennt werden.

7. Verfahren nach einem der Ansprüche 1 bis 6, **dadurch gekennzeichnet, dass** das Verbinden des Modulträgerbands (20) mit der zumindest einen Substratfolie (31, 32) unter Verwendung von Pressrollen (54, 55) erfolgt.

8. Verfahren nach Anspruch 7, **dadurch gekennzeichnet, dass** die Pressrollen (54, 55) beheizt werden.

9. Verfahren nach einem der Ansprüche 1 bis 8, **dadurch gekennzeichnet, dass** die zumindest eine Substratfolie (31, 32) vor dem Zusammenführen optisch gestaltet, insbesondere bedruckt wird.

10. Verfahren nach einem der Ansprüche 1 bis 9, **dadurch gekennzeichnet, dass** nach dem Schritt des Verbindens des Modulträgerbands (20) mit der zumindest einen Substratfolie (31, 32) eine optisch prüfbare und/ oder elektronisch prüfbare Personalisierung der aus dem Verbund (40) herauszutrennenden tragbaren Datenträger (10, 11) erfolgt.

## Claims

1. A method for manufacturing portable data carriers (10, 11), comprising the following steps of:
- providing a module carrier band (20), on which, on a front side, a plurality of chip modules (26) are arranged which are electrically connected with ISO contact areas (21) arranged on a back side of the module carrier band (20), and at least one substrate foil (31, 32), in the form of rolled goods in each case, and
- unrolling and joining the module carrier band (20) and the at least one substrate foil (31,32),
- permanently bonding the module carrier band (20) with the at least one substrate foil (31, 32) to form a layered composite (40), wherein from the composite (40) comprising the module carrier band (20) and the at least one substrate foil (31, 32) portable data carriers (10, 11) are so detached that each portable data carrier (10, 11) has at least one chip module (26), such that the contact areas (21) of the chip modules (26) are arranged on a surface of the data carrier (10, 11), wherein the bonding of the module carrier band (20) with the at least one substrate foil (31, 32) takes place by means of an adhesive,
**characterized in that**
the back side of the data carrier (10) is formed by a continuous foil (32),
wherein a foil (31) is arranged thereabove which has gaps (35) for receiving chips (24) and a casting compound (25) surrounding the chips (24),
wherein the module carrier band (20) is narrower than the substrate foil (31) formed by the foil (31),
wherein the foil (31) is substantially thicker than the module carrier band (20),
wherein, before the bonding of the layers (20, 31), a depression for receiving the module carrier band (20) was incorporated in the surface of the foil (31) onto which the module carrier band (20) is applied,
wherein the depth of the depression corresponds to the thickness of the module carrier band (20), so that a flush surface of the data carriers (10) is achieved.

2. The method according to claim 1, **characterized in that** the chip modules (26) on the module carrier band (20) are arranged at mutual intervals that correspond to the width and/or length dimensions of portable data carriers in the format ID-000 (10) or mini UICC (11).

3. The method according to claim 1 or 2, **characterized in that** the module carrier band (10) and the at least one substrate foil (31, 32) after the step of bonding are rolled up onto a roll (53) in the form of a composite (40), from which portable data carriers (10, 11) having at least one chip module (26) in each case can be detached at a later process stage.

4. The method according to claim 1 or 2, **characterized in that** from the composite (40) comprising the module carrier band (20) and the substrate foil (31, 32) portable data carriers (10, 11) are so detached that each portable data carrier (10, 11) has at least one chip module (26).

5. The method according to any of the claims 1 to 4, **characterized in that** the portable data carriers (10, 11) are so detached from the composite (40) that the contact areas (21) form over one third of one surface of respectively one of the portable data carriers (10, 11).

6. The method according to any of the claims 1 to 5, **characterized in that** the portable data carriers are detached in the format ID-000 (10) or mini UICC (11).

7. The method according to any of the claims 1 to 6, **characterized in that** the bonding of the module carrier band (20) with the at least one substrate foil (31, 32) takes place employing press rolls (54, 55).

8. The method according to claim 7, **characterized in that** the press rolls (54, 55) are heated.

9. The method according to any of the claims 1 to 8, **characterized in that** the at least one substrate foil (31, 32) is optically designed, in particular printed, before the joining.

10. The method according to any of the claims 1 to 9, **characterized in that** after the step of joining the module carrier band (20) with the at least one substrate foil (31, 32) an optically verifiable and/or electronically verifiable personalization of the portable data carriers (10, 11) to be detached from the composite (40) takes place.

## Revendications

1. Procédé de fabrication de supports de données (10, 11) portables, comprenant les étapes suivantes:
- mise à disposition d'une bande support pour modules (20) sur laquelle, sur une face avant, une pluralité de modules puces (26) sont agencés, lesquels sont connectés électriquement à des zones de contact (21) ISO agencées sur une face arrière de la bande support pour modules (20), et au moins d'une feuille formant substrat (31, 32) respectivement sous forme de produit en rouleau, et
- déroulement et accolement de la bande support pour modules (20) et de la au moins une feuille formant substrat (31, 32),
- jonction durable de la bande support pour modules (20) et de la au moins une feuille formant substrat (31, 32) de manière à obtenir un composite multicouches (40), il étant, à partir du composite (40) comprenant la bande support pour modules (20) et la au moins une feuille formant substrat (31, 32), découpé de telle manière des supports de données (10, 11) portables, que chaque support de données (10, 11) portable comporte au moins un module puce (26), de telle manière que les zones de contact (21) des modules puces (26) sont agencées sur une surface du support de données (10, 11), la jonction de la bande support pour modules (20) et de la au moins une feuille formant substrat (31, 32) ayant lieu au moyen de colle, **caractérisé en ce que**
la face arrière du support de données (10) est constituée par une feuille en continu (32),
une feuille (31) étant agencée par-dessus, laquelle comporte des évidements (35) destinés à l'hébergement de puces (24) et d'une masse de scellement (25) enrobant les puces (24),
la bande support pour modules (20) étant plus étroite que la feuille formant substrat (31) constituée par la feuille (31),
la feuille (31) étant sensiblement plus épaisse que la bande support pour modules (20),
il ayant été, dans la surface de feuille (31) sur laquelle la bande support pour modules (20) est appliquée, avant la jonction des couches (20, 31), pratiqué un évidement pour l'hébergement de la bande support pour modules (20),
la profondeur du renfoncement correspondant à l'épaisseur de la bande support pour modules (20), de telle sorte qu'il est obtenu une surface alignée des supports de données (10).

2. Procédé selon la revendication 1, **caractérisé en ce que** les modules puces (26) sont agencés sur la bande support pour modules (20) à des espacements les uns des autres qui correspondent aux dimensions de largeur et/ou de longueur de supports de données de format ID-000 (10) ou Mini-UICC (11).

3. Procédé selon la revendication 1 ou 2, **caractérisé en ce que** la bande support pour modules (10) et la au moins une feuille formant substrat (31, 32) sont, après l'étape de jonction en tant que composite (40), enroulées sur un rouleau (53) à partir duquel, à un stade de processus ultérieur, des supports de données (10, 11) portables pourront être découpés, comportant respectivement au moins un module puce (26).

4. Procédé selon la revendication 1 ou 2, **caractérisé en ce que**, à partir du composite (40) comprenant la bande support pour modules (20) et la feuille formant substrat (31, 32), des supports de données (10, 11) portables sont découpés de telle manière que chaque support de données (10, 11) portable comporte au moins un module puce (26).

5. Procédé selon une des revendications de 1 à 4, **caractérisé en ce que** les supports de données (10, 11) portables sont découpés de telle manière à partir du composite (40) que les zones de contact (21) constituent plus d'un tiers d'une surface de respectivement un des supports de données (10, 11) portables.

6. Procédé selon une des revendications de 1 à 5, **caractérisé en ce que** les supports de données portables sont découpés en format ID-000 (10) ou Mini-UICC (11).

7. Procédé selon une des revendications de 1 à 6, **caractérisé en ce que** la jonction de la bande support pour modules (20) et de la au moins une feuille formant substrat (31, 32) a lieu par utilisation de rouleaux presseurs (54, 55).

8. Procédé selon la revendication 7, **caractérisé en ce que** les rouleaux presseurs (54, 55) sont chauffés.

9. Procédé selon une des revendications de 1 à 8, **caractérisé en ce que** la au moins une feuille formant substrat (31, 32) est, avant l'accolement, dotée d'une configuration visuelle, notamment imprimée.

10. Procédé selon une des revendications de 1 à 9, **caractérisé en ce que**, après l'étape de jonction de la bande support pour modules (20) et de la au moins une feuille formant substrat (31, 32), une personnalisation optiquement vérifiable et/ou électroniquement vérifiable des supports de données (10, 11) portables découpés à partir du composite (40) a lieu.
